# EUROPEAN PATENT SPECIFICATION

(11) **EP 2 046 125 B1**
(45) Date of publication and mention of the grant of the patent: **28.12.2011**
(21) Application number: 06792662.6
(22) Date of filing: 02.08.2006
(51) Int. Cl.: A01N 43/78, A01N 25/02, A01N 25/04, A01N 25/30, A01P 3/00, A01P 1/00, C14C 9/02, A01N 47/48, A01N 47/18, A01N 47/12, A01N 43/80, A01N 43/653

(54) **BIOCIDAL COMPOSITION FOR LEATHER TANNING**
BIOZIDE ZUSAMMENSETZUNG FÜR DIE LEDERGERBUNG
COMPOSITION BIOCIDE POUR LE TANNAGE DU CUIR

(43) Date of publication of application: 15.04.2009
(73) Proprietor: Laboratorios Miret, S.A., 08228 Les Fonts de Terrassa, Barcelona (ES)
(72) Inventor: IZQUIERDO RAMIS, Amaro, E-08036 Barcelona (ES); SEGUER BONAVENTURA, Joan, E-08902 L'hospitalet De Llobregat (Barcelona) (ES); BELTRAN GIMENO, Albert, E-08014 Barcelona (ES)
(74) Representative: Gille Hrabal Struck Neidlein Prop Roos
(86) International application number: PCT/EP2006/064989
(87) International publication number: WO 2008/014820

(56) References cited:
- EP-A1- 0 390 539
- WO-A-96/28972
- WO-A-99/02037
- GB-A- 559 299
- US-A- 5 413 795
- DATABASE CA [Online] CHEMICAL ABSTRACTS SERVICE, COLUMBUS, OHIO, US; 1968, SKLOVSKII, M. M. ET AL: "Oiling leathers with methyl esters of high-molecular weight fatty acids" XP002438101 retrieved from STN Database accession no. 69:60051 & KOZHEVENNO-OBUVNAYA PROMYSHLENNOST , 10(2), 46-7 CODEN: KOOPAJ; ISSN: 0023-4354, 1968,
- ORLITA ALOIS: "Microbial biodeterioration of leather and its control: A review." INTERNATIONAL BIODETERIORATION & BIODEGRADATION, vol. 53, no. 3, 2004, pages 157-163, XP002438095 ISSN: 0964-8305

## Description

### Field of the invention

The invention relates to a biocidal composition comprising 2-(thiocyanomethylthio)-benzothiazole (to be designated hereinafter as TCMTB) . More in particular, the invention relates to a concentrated solution of TCMTB for the preparation of an emulsion of TCMTB.

Leathers in the wet blue condition are susceptible to attack by microorganisms, particularly moulds. Unless the value of pH or the aggressive nature of chemicals used in leather manufactures prevents microbial growth, both the skin and wet blue leathers are subject to attack by a variety of microorganisms. When moulds grow in leather, usually they cause deep spoilage; therefore the control of these microorganisms in the early stages of manufacture is critically important in the production of high quality leather. In this way, the biocide incorporation in tanning liquor protects the hide from microbiological deterioration during the tanning process; for that reason, since wet leather is most susceptible to fungal contamination, there is a need for improved fungicide systems for wet blue leathers that are more effective, but at the same time less toxic and more environmentally safe at lower cost.

TCMTB is an effective fungicide with a broad spectrum of activity, with good performance even at low dosages, known to be useful in controlling bacteria and fungi in tanneries. TCMTB has the additional advantage that it works exceptionally well at the low pH levels of pickle solutions. Typical emulsifiable compositions comprise often 10-50% by weight of TCMTB which may be diluted with water to generate a fine dispersion of the biocide providing an ultimate TCMTB concentration in the diluted preparation of about 0.02 to 0.3% by weight for the leather protection application. Organic solvents, such as glycols or hydrocarbons, are most largely employed for dissolving TCMTB. Nevertheless, current TCMTB compositions show limited stability at low temperatures of their working dilutions in water, since water can cause the TCMTB crystallisation.

Compositions with TCMTB are described in the state of the art. In EP -A- 0 390 539 preparations with a branched or straight chain alkyl ester-alcohol, such as a mixture of 2,2,4-trimethylpentane-1,3-diol-1-isobutyrate and 2,2,4-trimethylpentane-1,3-diol-3-isobutyrate. In WO 99/02037 compositions are described in which a mixture of TCMTB and methylene bis(thiocyanate) is combined with a N,N-dimethylamide. In WO 96/28972 aqueous emulsions of TCMTB are described, these emulsions comprise an antifungal combination of TCMTB and 3-iodo-2-propynyl-N-butylcarbamate with a non-ionic surfactant and a thickening agent. In US -A-5,413,795 a composition of TCMTB on a solid carrier is described, the compositions which are described do not contain long chain fatty acid esters or a surfactant. The treatment of hides and skins with methyl esters of high molecular weight synthetic fatty acids is described by Skloskii and Epsthein (Kozhevenno-Obuvnaya Promyshlennost 1968; 10(2): 46-7). In GB -A- 559,299 the treatment of leather is described which involves the application of an oil to the leather, which oil may have the form of a blend of a blown oil and a fatty acid ester. Orlita (Intemational Biodeterioration & Biodegradation, 2004: 53: 157-163) describes fungicides used in the leather industry.

It is the object of the present invention to provide a preparation of TCMTB which is stable and suitable for the preparation of an emulsion.

It is a further object of the present invention to provide an emulsion of TCMTB which is stable during longer periods.

The present invention relates to a fungicide concentrate comprising
(i) 2-(thiocyanomethylthio)-benzothiazole,
(ii) an ester selected from the group consisting of the methyl, ethyl or propyl ester of a C₆-C₂₀ fatty acid derivable from olive oil, rapeseed oil, canola oil, groundnut oil, palm oil, soybean oil, sunflower oil, thistle oil or castor oil, or a blend of such esters,
(iii) a surfactant or blend of surfactants,
(iv) optionally a further biocide, and
(v) optionally a hydrocarbon solvent.

The present invention furthermore relates to an emulsion prepared by dispersing the fungicide concentrate in water.

Furthermore the present invention relates to the use of the emulsion for the treatment of leather in the tanning process.

### General description of the invention.

The emulsifiable biocidal composition with enhanced stability comprising: (a) an ester of a fatty acid or a blend of esters of fatty acids, (b) TCMTB as fungicide, and (c) a surfactant medium.

Technical grade TCMTB is available as a product with a purity of 80%.

The esters of fatty acids according to the present invention are distinguished by the following characteristics: (a) they are liquid and stable products at room temperature, (b) they represent biodegradable products, (c) they are environmentally safe, and (d) they are a fat fluid which is suitable for leather treatment, and are therefore compatible with the solutions used in the tanning process, providing a stable and homogeneous mixture.

Emulsifiable concentrates have generally involved a solvent as an essential ingredient. The present invention is based on emulsifier concentrates containing esters of fatty acids. Fatty acids employed in this invention are C₆-C₂₀ fatty acids, preferably C₁₆-C₁₈ fatty acids, and more preferred C₁₈ saturated and unsaturated fatty acids such as stearic acid, oleic acid and linoleic acid. The fatty acids are used in the compositions of the invention as the corresponding esters, such as methyl stearate, methyl oleate and methyl linoleate. These fatty acids are derivable from vegetable oils such as olive oil, rapeseed oil, canola oil, groundnut oil, palm oil, soya bean oil, sunflower oil, thistle oil, or castor oil and are used as the methyl ester; and most preferred in the preparation of TCMTB concentrates are mixtures of above described esters of fatty acids.

The aforesaid fatty acid methyl esters are commercially available from several suppliers, among these Industrial Quimica Lasem, Cognis, Gustav Heess, or Arkema.

Other suitable esters may be the corresponding ethyl and propyl esters, but the methyl esters are preferred.

Compositions of the present invention are commonly formulated by dissolving the active biocide ingredient in the selected fatty acid methyl ester or blend of fatty acids methyl esters. Typically useful compositions of emulsifiable concentrates are formulated containing from 1:2 to 2:1 parts of the biocidal compound to the methyl ester of fatty acid and more usually about 1:1 relative parts by weight. Preferably, the fatty solvent may contain the appropriate amount of proper surfactants, mixed at a temperature between 30 and 50°C.

The amount of the fatty acid ester or the blend of fatty acid esters is usually 10 to 65 % by weight relative to the total weight of the fungicide concentrate.

The emulsifiable fungicidal concentrate of the invention exhibits an enhanced protection of leather against fungi. This higher resistance to fungal attack is related to the improved penetration and fixation of fungicidal compositions into leather by comprising in the composition methyl esters of fatty acids with better compatibility between leather-biocide-tanning liquor, and a suitable combination of surfactants that provides an excellent uptake and penetration of the biocide into the leather during the tanning process.

Another advantage to include derivative vegetable oils in the emulsifiable concentrate of TCMTB is that this particular type of solvent may also contribute to the long-term stability of the biocide water dispersion.

The fungicide concentrate according to the present invention normally contains TCMTB as the only active ingredient. Depending on the circumstances and the conditions it may be suitable to add a further product with biocidal action.

In that case the composition can additionally contain a co-biocide selected from the group consisting of 2-octyl-2H-isothiazol-3-one (OIT), 4,5-dichloro-2-octyl-2H-isothiazol-3-one (DCOIT), 3-iodo-2-propynyl butylcarbamate (IPBC), zinc pyrithione, methylene bis(thiocyanate) (MBT), 2,4,6-tribromophenol (TBP), phenol, 2,2'-methylene bis(4-chlorophenol) (dichlorophen), chlorocresol, biphenyl-2-ol, p-[(diiodomethyl)sulphonyl]toluene, 1 H-benzimidazol-2-ylcarbamic acid methyl ester (carbendazym), chlorotalonil, thiabendazole and triazoles such as propiconazole or tebuconazole and combinations thereof.

The aforementioned biocides are commercially available from numerous sources.

The amount of the further product with biocidal action is usually less than 15 % by weight, relative to the weight of the total fungicide concentrate.

The manufacture method of TCMTB emulsifiable concentrates based on methyl esters of fatty acids according to the invention is described, and the evaluation of its dispersibility in water and the antifungal test for wet blue hide were studied.

The results of the study provide a further insight into the mode of interaction of TCMTB emulsion dispersions with wet blue leather, the importance of the emulsion stability in practical application, and the role of bound and unbound fungicide in antifungal activity.

A hydrocarbon solvent may be present if necessary. In particular, glycols may be added as co-solvents in the biocidal compositions, such as ethyl diglycol, butyl glycol, dipropylene glycol, triethylene glycol, poly(ethyleneglycol) 200 or PEG 200 and dipropylene glycol monomethyl ether. Nonetheless such compositions containing a concentration of naphta solvent are not preferred because naphta solvents increase the odour, toxicity and environmental risks and offer less long term cold stability in the case of such compositions containing glycols. Therefore the amount of the hydrocarbon solvent shall not exceed 25 % by weight, more in particular it shall not exceed 20 % by weight.

The biocidal composition of the present invention may be prepared as a concentrate for dilution prior to its intended use for all applications for which TCMTB dispersions in water are currently used.

The surfactant of the fungicide concentrate of the present invention consists of at least one non-ionic surfactant, and may comprise at least one anionic surfactant.

Typical non ionic emulsifiers which can be used in the present invention consist of triglyceride ethoxilates with 30-44 EO, most preferred castor oil ethoxylates with 33-36 EO (where EO refers to the number of ethylene oxide derived units in the surfactant), and can also include ethoxylated fatty alcohols, those derived, but not limited, from C11-alkylethoxylate alcohol, C13 oxo alcohol ethoxylate and iso C13-ethoxylate alcohol. Typically, the number of ethoxylate units differed from 5 to 12, and, in general, with increasing chain length of the alkyl alcohol the number of ethoxylate units should also be increase. The total non-ionic surfactant in the composition may range from about 5 to 35% weight percent; being preferred a concentration of about 15 weight percent.

The surfactant of the present invention may also incorporate anionic surfactants which comprise, but are not limited to, linear alkyl benzene sulfonates, alkyl aryl sulfonates, and the like. Preferred anionic surfactants include n-C10-C14 alkyl benzene sulfonate salts, and most preferably n-C12 alkyl benzene sulfonate calcium salt.

The abovementioned surfactants are commercially available from several suppliers, from example Clariant, BASF, Cognis, ICI Surfactants and Dr. Kolb.

The present application contains the following pictures:

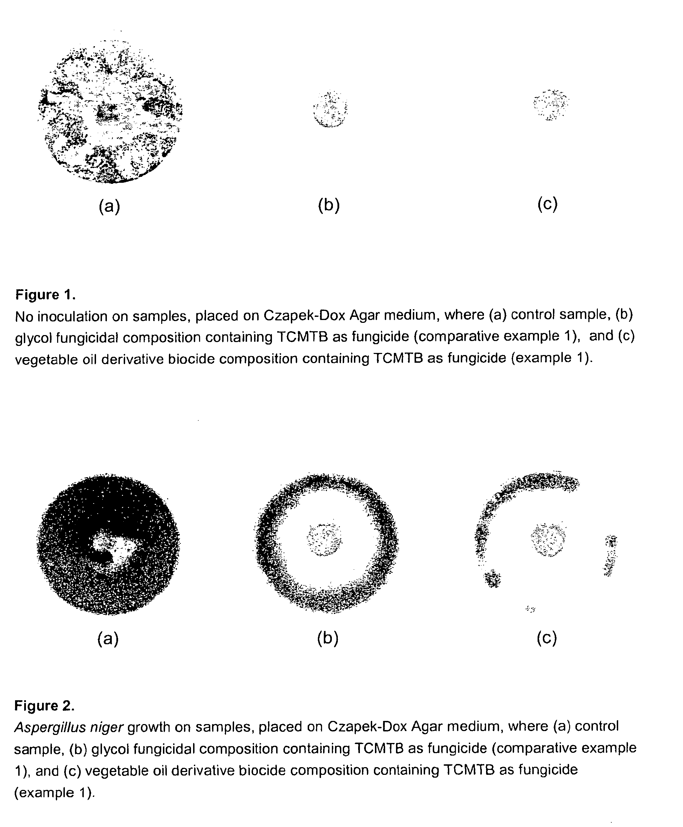

**Figure 1**. No inoculation on samples, placed on Czapek-Dox Agar medium, wherein (a) is a control sample, (b) is treated with a glycol fungicidal composition containing TCMTB as fungicide, and (c) is treated with a vegetable oil derivative biocide composition containing TCMTB as fungicide;
**Figure 2****.** *Aspergillus niger* growth on samples, placed on Czapek-Dox Agar medium, wherein (a) is a control sample, (b) is treated with a glycol fungicidal composition containing TCMTB as fungicide, and (c) is treated with a vegetable oil derivative biocide composition containing TCMTB as fungicide;

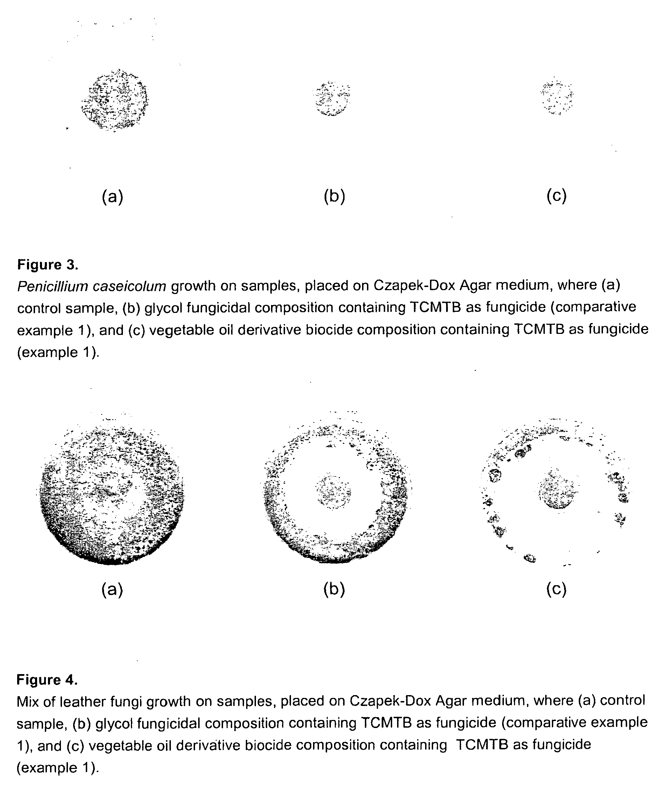

**Figure 3****.** *Penicillium caseicolum* growth on samples, placed on Czapek-Dox Agar medium, wherein (a) is a control sample, (b) is treated with a glycol fungicidal composition containing TCMTB as fungicide, and (c) is treated with a vegetable oil derivative biocide composition containing TCMTB as fungicide;
**Figure 4****.** Mix of leather fungi growth on samples, placed on Czapek-Dox Agar medium, wherein (a) is a control sample, (b) is treated with a glycol fungicidal composition containing TCMTB as fungicide, and (c) is treated with a vegetable oil derivative biocide composition containing TCMTB as fungicide.

### Evaluation of biocides stability in wet blue leather processing

Since the treatment of the wet blue leather takes place in aqueous media, it is necessary to evaluate the behaviour and stability of biocides compositions in the water application of leather processing. The better water dispersion of fungicide yields a better fixation of biocide active in leather. Consequently, the more stable dispersion would provide easier available biocides; and the better penetration and fixation of fungicide in leather would result in a higher leather protection; and on the other hand, less biocide would be consumed to achieve a suitable protection.

Dispersibility in water of one percent dilutions of the fungicide concentrate of the present invention was evaluated. This was accomplished by adding the appropriate amount of the concentrate to a dispersion glass tube containing 200 ml of water. The dispersibility was evaluated daily at different conditions of temperature and hardness of water.

The dispersibility of TCMTB compositions based on derivative vegetable oils was found to be higher compared to products based on glycol or hydrocarbons solutions at the same fungicide concentration. Furthermore working dilutions in water of inventive TCMTB compositions show no influence of water hardness and the dispersion stability at low temperatures compared to commercial existing TCMTB compositions is improved. Hence, it was the surprising observation that the initial incorporation (bloom) was excellent and that no shaking was necessary to achieve the total dispersion of biocidally active ingredient, leading to a milky dispersion of TCMTB. What is more, the stability of the dispersion was also higher for those compositions containing a derivative vegetable oil as solvent medium; neither creaming nor separation was observed after one week without shaking the dispersion tubes, in the case of 30% of TCMTB, and even in compositions containing lower amounts of fungicide. On the other hand, such compositions containing more than 30 weight percent of TCMTB almost shown no bloom in water dilutions, however after stirring the dispersion tubes TCMTB spreads completely, performing good stability when dispersed in water.

### Procedure for determining the biocidal activity

The samples of leather used to evaluate the compositions described in the present invention were obtained from specialised factories.

Addition of fungicides to tanning process was done in two stages of the process: an initial dose one hour previous to basification, and an ultimate application at the end of the leather processing, covering the required range of concentrations. Thus the tanning process used in laboratory to evaluate the fungicides is carried out as it follows. First of all, pickled bovine hides are introduced in a steel drum, which contains water with 7 baumé degrees at room temperature, where an acidic aqueous solution of acetic acid and formic acid were added. After remaining for a suitable length of time in this tanning liquor, chrome salts and tan fat liquors were introduced in the drum. In this point, after chroming, the biocide was added in the rotary shaker heated up to 40°C and left over one hour drumming; afterwards, in order to neutralise the acidity of the aqueous solution, a basic solution of sodium bicarbonate was added and left overnight rotating, adjusting final pH to 3.9. Finally, a second biocide dosage was done. At the end of the treatment, the wet blue sample was washed in water for half an hour and left draining. Three pieces of hide were tanned for each biocide evaluated and additionally untreated control leathers were sampled in this manner.

Leather humidity was found to be about 54 to 66 weight percent.

The test method developed by the inventors for determining the fungi resistance of fungicides in wet blue samples involves cutting circular discs of treated leathers of 20 mm of diameter and placing these in the middle of a Petri dish, previously filled with15 ml of Czapex Dox Agar acidified with 1% of a lactic acid 10% solution; afterwards the leather probe and Agar medium is inoculated with 1 ml of a dispersion containing fresh spores of known fungal species. Finally, the Petri dish is incubated during one week at room temperature. Three replicates are prepared for each sample and inoculation. The following pure cultures of fungi were used: *Aspergillus niger, Penicillium caseicolum* and a standard fungal spore mixture of *Aspergillus terreus, Penicillium frecuentans, Cladosporium cladosporioides* and *Chaetomium globosum.*

Results were expressed as fungal growing over leather disc without inoculation and as millimetres of inhibition halo in the case of inoculated probes. Better protection would be achieved in these samples without fungal growing over the leather and with higher inhibition halos.

The pictures 1 to 4 are examples to illustrate typical resulting inhibition halos and fungal growing in leather probes, but in no way the present invention is limited to the fungicide concentration exemplified. Accordingly the tanned wet blue cuttings of the pictures were either not treated in the control samples represented as the part (a) of each figure, or treated with a 0.15% biocide composition, containing a 30 weight percent TCMTB emulsifiable composition described in comparative example 1 based on triethylene glycol, represented as the part (b) of each figure, or treated with a 0.15% biocide composition, containing a 30 weight percent TCMTB emulsifiable composition described in example 1 based on methyl esters of fatty acids derived from vegetable oils, represented as the part (c) of each figure.

The mix of fungi were prepared from isolated fungi acquired from leathers with fungal growing, among theses *Aspergillus terreus, Penicillium frecuentans, Cladosporium cladosporioides* and *Chaetomium globosum* were identified.

Notice that replicate tests for the practical evaluation of fungicides in wet blue samples can vary appreciably showing a wide scattering of results due to various factors, including obviously the used biocide, dosage or storage time and conditions; but as well due to thickness of the hides and whether neck, belly or butt is sampled; therefore antifungal evaluation tests should be done using comparable sections of the body of wet blued hides.

The results obtained in the experiments which have been presented as the figures 1 to 4 in the present application have been calculated as inhibition in mm, the results are presented in the following table 1.

In the data in the following table the preparation according to the invention is the preparation as described in example 1. The effect provided through example 1 is compared with the effects achieved after the treatment with a preparation as described in comparative example 1.

**Table 1.**

| Inhibition halos (results expressed as mm) for the inoculated fungi and in Petri dishes without inoculation, using biocidal compositions containing a 30% of TCMTB. | | | | |
|---|---|---|---|---|
| **sample** | **without fungi inoculation** | ***Aspergillus niger*** | ***Penicillium caseicolum*** | **Mix of leather fungi** |
| **control sample** | growing | 0-0 | 0-0 | 0-0 |
| **glycol** | without growing | 20-22 | 27-28 | 18-20 |
| **vegetable oil derivative** | without growing | 26-28 | 29-30 | 24-27 |

Comparison of the experimental results reveals that leather treated with TCMTB dissolved in methyl esters of fatty acids is substantially more resistant against test moulds than leather treated with a common fungicide preparation based on glycol.

### Analytical methods for determination of fungicides residual

In addition to the evaluation of fungicides through the determination of fungi resistance, the biocide protection of the wet blue was checked by chemical analysis of fungicide residues in processed leathers. Quantitative analytical method was based on Reversed Phase High Pressure Liquid Chromatography (HPLC) using an external calibration and subsequent UV detection with the help of precalibrated curves. This reproducible method requires the biocide removal from the probe of protected leather through the use of suitable extracting solvents, such as methyl glycol and acetonitrile, and finally diluted to the proper concentration.

To evaluate the field of the present invention the new emulsifiable concentrates of TCMTB compositions according to the invention were compared to existing commercial TCMTB products in glycolic and hydrocarbon-based solutions. In this way, table 2 shows the residual values of biocide found in leathers treated with products containing a 30% of TCMTB formulated using different families of solvents, particularly glycol, hydrocarbon and methyl esters of fatty acids. Additional products formulated with a 20% of TCMTB and a 2.5% of OIT as co-biocide in different solvent media are also presented.

**Table 2. Biocide residues after treatment with products based on methyl ester of acids according to the invention compared with standard products of TCMTB.**

| **sample** | **dosage** | **TCMTB mg/Kg leather** | **OIT mg/Kg leather** |
|---|---|---|---|
| **example 1 VEGETAL 30% TCMTB** | 0.15% | 820 | - |
| **comp. example 1 30% TCMTB GLYCOL** | 0.15% | 756 | - |
| **comp. example 2 30% TCMTB NAPHTA** | 0.15% | 644 | - |
| **example 6 VEGETAL 20% TCMTB + 2.5% OIT** | 0.20% | 543 | 32 |
| **comp. example 3 20% TCMTB + 2.5% OIT GLYCOL** | 0.20% | 415 | 13 |
| **comp. example 4 20% TCMTB + 2.5% OIT NAPHTA** | 0.20% | 352 | 20 |

Results demonstrate how TCMTB from emulsifiable compositions based on methyl ester of acids according to the invention has a stronger affinity to leather than glycol or hydrocarbon solvents compositions. Moreover, emulsifiable compositions of TCMTB based on methyl esters of vegetable oils increase the biocide penetrability in hides and consequently better protection is achieved. This improved penetration and fixation of fungicidal compositions into leather shall promote a higher durability of leathers under typical storage conditions.

Further results of biocide residues in leathers wet blue tanned using such compositions described in detail previously and developed containing methyl ester of acids according to the invention are presented in table 4.

Wet blue hides were stored under damp conditions, and remaining residual biocide in leathers was monitored during three months. Table 3 presents the results of mean residual TCMTB found during this period in leathers protected with a 0.15 weight percent dose of a preservative product containing a 30% of biocide in vegetable derivative solution, as described in example 1. Results are compared to a standard glycol composition of TCMTB as described in comparative example 1.

| **Table 3.** Evolution against time of storage of biocide residual in leathers treated with a 0.15% of a TCMTB composition based on methyl ester of acids according to the invention containing a 30% of biocide, compared to a TCMTB glycolic composition. | | | | | | |
|---|---|---|---|---|---|---|
| **storage period** | **vegetable oil methyl ester** | | | **glycol** | | |
| | **hide humidity** | **TCMTB mg/kg leather** | **TCMTB mg/kg dry leather** | **hide humidity** | **TCMTB mg/kg leather** | **TCMTB mg/kg dry leather** |
| initial | 62.70 | 820 | 2198 | 63.48 | 756 | 2070 |
| 1 month | 60.87 | 783 | 2001 | 61.85 | 535 | 1402 |
| 2 months | 59.59 | 731 | 1809 | 59.70 | 411 | 1020 |
| 3 months | 58.30 | 658 | 1578 | 57.91 | 342 | 813 |

Leathers show no growth of fungi on the surface after evaluation period and the biocide residuals are adequate enough to assure a suitable protection of hides after tanning process although the TCMTB concentration is reduced by approximately 20% from the initial value. Meanwhile, the humidity remains more stable. In front of TCMTB compositions of the present invention, glycolic common formulas presented higher fungicide degradation at the end of evaluation time, more than 50% from the initially found TCMTB residual. Analytical results provide evidence of the adequately protection of leathers when TCMTB is added, and the extension of fungicide post-treatment evaluation during storage afforded further insight into fungicide effectiveness and suitability for long time field applications

**Table 4. Comparison of biocide residual in leathers treated with different kind of biocide compositions and dosage.**

| **sample** | **dosages** | **TCMTB mg/kg leather** | **OIT mg/kg leather** | **MBT mg/kg leather** | **TBP mg/kg leather** | **IPBC mg/kg leather** | **carbendazym mg/kg leather** | **triazole mg/kg leather** |
|---|---|---|---|---|---|---|---|---|
| **example 1 30% TCMTB** | 0.10% | 585 | - | - | - | - | - | - |
| **example 1 30% TCMTB** | 0.15% | 820 | - | - | - | - | - | - |
| **example 5 20% TCMTB** | 0.20% | 680 | - | - | - | - | - | - |
| **example 6 20% TCMTB + 2.5% OIT** | 0.10% | 371 | 16 | - | - | - | - | - |
| **example 6 20% TCMTB + 2.5% OIT** | 0.20% | 543 | 32 | - | - | - | - | - |
| **example 13 50% TCMTB** | 0.10% | 957 | - | - | - | - | - | - |
| **example 14 50% TCMTB + 4.5% OIT** | 0.10% | 876 | 27 | - | - | - | - | - |
| **example 8 10% TCMTB + 10% MBT** | 0.15% | 497 | - | 102 | - | - | - | - |
| **example 9 10% TCMTB +10% TBP** | 0.15% | 512 | - | - | 94 | - | - | - |
| **example 10 10% TCMTB + 10% IPBC** | 0.15% | 486 | - | - | - | 89 | - | - |
| **example 11 10% TCMTB +10% carbendazym** | 0.15% | 270 | - | - | - | - | 7 | - |
| **example 12 10% TCMTB + 10% triazole** | 0.15% | 473 | - | - | - | - | - | 75 |

The following examples are intended to illustrate, but in no way limit the scope of the present invention. All parts and percentages are by weight.

### Example 1

A composition containing 37.5% of TCMTB 80 (so as to yield 30% active TCMTB), 27.5% methyl oleate, 10.0% soya bean oil methyl ester, 10.0% Hedipin-R/360 from Dr. Kolb, 10.0% Atlox 3335B from ICI Surfactants, 2.5% Genapol UD-050 from Clariant and 2.5% Lutensol TO 8 from BASF.

The mixture was stirred and heated to 40°C until a brownish clear solution was obtained. This solution remains clear on cooling to room temperature and aging.

### Example 2

A composition containing 37.5% of TCMTB 80 (so as to yield 30% active TCMTB), 17.5% methyl oleate, 10.0% soya bean oil methyl ester, 5.0% groundnut oil methyl ester, 10.0% castor oil methyl ester, 5.0% Agnique CSO-44-F from Cognis, 10.0% Atlox 3335B and 5.0% Lutensol TO 5 from BASF. The mixture was stirred and heated to 40°C until a brownish clear solution was obtained. This solution remains clear on cooling to room temperature and aging.

### Example 3

A composition containing 37.5% of TCMTB 80 (so as to yield 30% active TCMTB), 25.0% methyl oleate, 15.0% triethylene glycol, 7.5% Eumulgin PRT 33 from Cognis, 10.0% Atlox 3335B and 5.0% Genapol X-080 from Clariant. The mixture was stirred and heated to 40°C until a brownish clear solution was obtained. This solution remains clear on cooling to room temperature and aging.

### Example 4

A composition containing 37.5% of TCMTB 80 (so as to yield 30% active TCMTB), 20.0% methyl oleate, 20.0% solvent naphta 18/20, 4.0% Hedipin-R/300 from Dr. Kolb, 12.5% Atlox 3335B and 6.0% Imbentin-U/050 from Dr. Kolb.

The mixture was stirred and heated to 40°C until a brownish clear solution was obtained. This solution remains clear on cooling to room temperature and aging.

### Example 5

A composition containing 25.0% of TCMTB 80 (so as to yield 20% active TCMTB), 50.0% methyl oleate, 15.0% castor oil methyl ester, 5.0% Agnique CSO-35 from Cognis and 5.0% Atlox 3335B.

The mixture was stirred and heated to 40°C until a brownish clear solution was obtained. This solution remains clear on cooling to room temperature and aging.

### Example 6

A composition containing 25.0% of TCMTB 80 (so as to yield 20% active TCMTB), 2.5% OIT pure, 42.5% methyl oleate, 10.0% castor oil methyl ester, 5.0% Hedipin-R/400H from Dr. Kolb, 10.0% Atlox 3335B and 5.0% Imbentin-T/120 from Dr. Kolb.

The mixture was stirred and heated to 40°C until a brownish clear solution was obtained. This solution remains clear on cooling to room temperature and aging.

### Example 7

A composition containing 25.0% of TCMTB 80 (so as to yield 20% active TCMTB), 5.0% diluted OIT, 35.0% soybean oil methyl ester, 10.0% castor oil methyl ester, 10% Hedipin-R/400H, 10.0% Atlox 3335B and 5.0% Imbentin-T/120.

The mixture was stirred and heated to 40°C until a brownish clear solution was obtained. This solution remains clear on cooling to room temperature and aging.

### Example 8

A composition containing 12.5% of TCMTB 80 (so as to yield 10% active TCMTB), 10.0% MBT, 44.0% methyl oleate, 11.0% ethyl diglycol, 4.0% Hedipin-R/300, 5.0% Atlox 3335B, 10.0% Phenylsulfonat CAL from Clariant and 3.5% Imbentin-T/100 from Dr. Kolb.

MBT was dissolved, in a blend of methyl oleate and glycol, under stirring and heated up to 50°C until a fine yellow solution was obtained. Subsequently surfactants were added to the MBT oleate/glycol solution under stirring, and the temperature of the mixture was kept about 40°C, finally TCMTB was introduced in the mixture to give a brown solution. This solution develops a fair opalescence when kept at room temperature for a period higher than 2 months.

### Example 9

A composition containing 12.5% of TCMTB 80 (so as to yield 10% active TCMTB), 10.0% TBP, 51.5% methyl oleate, 10.0% PEG 200, 6.0% Eumulgin PRT 36 from Cognis and 10.0% Atlox 3335B.

TBP was dissolved, in a mixture of methyl oleate and glycol, under stirring and heated up to 50°C until a clear yellowish solution was obtained. Afterwards surfactants were added to the TBP oleate/glycol solution under stirring, and the temperature of the mixture was kept about 40°C, finally TCMTB was introduced in the mixture to give a brown solution. This solution remains clear on cooling to room temperature and aging.

### Example 10

A composition containing 12.5% of TCMTB 80 (so as to yield 10% active TCMTB), 10.0% IPBC, 35.2% sunflower methyl ester, 24.8% Dowanol DPM (dipropylene glycol monomethyl ether) from Dow Chemical Company, 6.0% Agnique CSO-35, 8.0% Phenylsulfonat CAL and 3.5% Imbentin-T/120 from Dr. Kolb.

IPBC was dissolved, in a mixture of sunflower methyl ester, glycol and ethoxylated castor oil under stirring and heated up to 40°C until a clear yellow solution was obtained. After cooling to 30°C, remainder surfactants were added with continuous stirring, finally TCMTB was introduced in the mixture to give a brown solution. This solution remains clear on cooling to room temperature and aging.

### Example 11

A composition containing 12.5% of TCMTB 80 (so as to yield 10% active TCMTB), 10.0% carbendazym, 49.0% sunflower methyl ester, 12.5% Dowanol DPM, 8.0% Agnique CSO-35, 4.0% Phenylsulfonat CAL and 4.0% Imbentin-T/120.

Carbendazym was dissolved, in a blend of sunflowerate and glycol, under stirring and heated up to 40°C until a fair yellow solution was obtained; then surfactants were added to the mixture under stirring and finally TCMTB was introduced to give a brown solution, where the solution remains clear on cooling to room temperature and on aging

### Example 12

A composition containing 12.5% of TCMTB 80 (so as to yield 10% active TCMTB), 10.0% propiconazole, 31.0% methyl oleate, 30.5% castor oil methyl ester, 7.0% Agnique CSO-35 and 9.0% Atlox 3335B. The mixture was stirred and heated to 40°C until a dark yellow solution was obtained. This solution remains clear on cooling to room temperature and aging.

### Example 13

A composition containing 62.5% of TCMTB 80 (so as to yield 50% active TCMTB), 10.0% methyl oleate, 5.0% soya bean oil methyl ester, 10.0% Hedipin-R/360, 10.0% Atlox 3335B and 2.5% Lutensol TO 8.

The mixture was stirred and heated to 40°C until a dark brown solution was obtained. This solution remains clear on cooling to room temperature and aging.

### Example 14

A composition containing 62.5% of TCMTB 80 (so as to yield 50% active TCMTB), 4.5% pure OIT, 12.5% methyl oleate, 10.5% dipropylene glycol monomethyl ether, 5.0% Hedipin-R/400H and 5.0% Atlox 3335B.

The mixture was stirred and heated to 40°C until a brownish clear solution was obtained. This solution remains clear on cooling to room temperature and aging.

### Example 15

A composition containing 62.5% of TCMTB 80 (so as to yield 50% active TCMTB), 10.0% OIT diluted, 10.0% sunflower methyl ester, 2.5% dipropylene glycol monomethyl ether, 7.0% Hedipin-R/400H and 8.0% Atlox 3335B.

The mixture was stirred and heated to 40°C until a brownish clear solution was obtained. This solution remains clear on cooling to room temperature and aging.

### Comparative Example 1

### 30% TCMTB glycol solution

A composition containing 37.5% of TCMTB 80 (so as to yield 30% active TCMTB), 30.5% triethylene glycol, 5.0% Atlox 3335B, 12.0% nonyl phenol with 15 EO, 5.0% ethoxylated castor oil and 10.0% n-methyl pyrrolidone.

The mixture was stirred and heated to 40°C until a brownish clear solution was obtained. This solution remains clear on cooling to room temperature and aging.

### Comparative Example 2

### 30% TCMTB naphta solvent

A composition containing 37.5% of TCMTB 80 (so as to yield 30% active TCMTB), 45.0% naphta solvent, 5.0% Atlox 3335B and 12.5% butyl diglycol. The mixture was stirred and heated to 40°C until a brownish clear solution was obtained. This solution remains clear on cooling to room temperature and aging.

### Comparative Example 3

### 20% TCMTB + 2.5% OIT glycol solution

A composition containing 25.0% of TCMTB 80 (so as to yield 20% active TCMTB); 5.5% OIT 45% in propylene glycol, 46.5% triethylene glycol, 3.0% Atlox 3335B, 10.0% nonyl phenol with 30 EO, 5.0% ethoxylated castor oil and 5.0% n-methyl pyrrolidone.

The mixture was stirred and heated to 40°C until a brownish clear solution was obtained. This solution remains clear on cooling to room temperature and aging.

### Comparative Example 4

### 20% TCMTB + 2.5% OIT naphta solution

A composition containing 25.0% of TCMTB 80 (so as to yield 20% active TCMTB), 5.5% OIT 45% in propylene glycol, 50.0% naphta solvent, 2.0% Atlox 3335B, 5.0% ethoxylated castor oil and 12.5% butyl diglycol.

The mixture was stirred and heated to 40°C until a brownish clear solution was obtained. This solution remains clear on cooling to room temperature and aging.

## Claims

1. A fungicide concentrate comprising:
(i) 2-(thiocyanomethylthio)-benzothiazole,
(ii) an ester selected from the group consisting of the methyl, ethyl or propyl ester of a C₆-C₂₀ fatty acid derivable from olive oil, rapeseed oil, canola oil, groundnut oil, palm oil, soybean oil, sunflower oil, thistle oil or castor oil, or a blend of such esters,
(iii) a surfactant or blend of surfactants,
(iv) optionally a further biocide,
(v) optionally a hydrocarbon solvent.

2. The fungicide concentrate according to claim 1 comprising:
(i) 2-(thiocyanomethylthio)-benzothiazole in an amount of 2.5 to 70 % by weight,
(ii) an ester selected from the group consisting of the methyl, ethyl or propyl ester of a C₆-C₂₀ fatty acid derivable from olive oil, rapeseed oil, canola oil, groundnut oil, palm oil, soybean oil, sunflower oil, thistle oil or castor oil, or a blend of such esters, in an amount of 10 to 65 % by weight,
(iii) the surfactant in an amount of 5 to 25 % by weight,
(iv) the further biocide in an amount of 0 to 15 % by weight,
(v) the hydrocarbon solvent in an amount of 0 to 25 % by weight.

3. The fungicide concentrate of claim 1 or 2, wherein the ester is an ester of stearic acid, oleic acid or linoleic acid.

4. The fungicide concentrate of any of claims 1 to 3, wherein the fatty acid is esterified with methanol.

5. The fungicide concentrate of any of claims 1 to 4, the further biocide being selected from the group consisting of 2-octyl-2H-isothiazol-3-one (OIT, 4,5-dichloro-2-octyl-2H-isothiazol-3-one (DCOIT), 3-iodo-2-propynyl butylcarbamate (IPBC), zinc pyrithione, methylene bis(4-chlorophenol)(dichlorophen), chlorocresol, biphenyl-2-ol, p-[(diiodomethyl)sulphonyl]toluene, 1 H-benzimidazol-2-ylcarbamic acid methyl ester (carbendazym), chlorotalonil, thiabendazole and triazoles such as propiconazole or tebuconazole and combinations thereof.

6. The fungicide concentrate of any of claims 1 to 5, wherein the surfactant is a non-ionic surfactant optionally comprising at least one anionic surfactant.

7. An emulsion prepared by dispersing the fungicide concentrate of any of claims 1 to 6 in water.

8. Use of the emulsion according to claim 7 for tanning leather.

## Patentansprüche

1. Fungizidkonzentrat, umfassend:
(i) 2-(Thiocyanomethylthio)-benzothiazol,
(ii) einen Ester, ausgewählt aus der aus dem Methyl-, Ethyl- oder Propylester einer C₆-C₂₀-Fettsäure, die aus Olivenöl, Rapsöl, Canolaöl, Erdnussöl, Palmöl, Sojabohnenöl, Sonnenblumenöl, Distelöl oder Castoröl erhältlich ist, oder eine Mischung solcher Ester bestehenden Gruppe,
(iii) einen oberflächenaktiven Stoff oder ein Gemisch oberflächenaktiver Stoffe,
(iv) gegebenenfalls ein weiteres Biozid,
(v) gegebenenfalls ein Kohlenwasserstofflösungsmittel.

2. Fungizidkonzentrat nach Anspruch 1 , umfassend:
(i) 2-(Thiocyanomethylthio)-benzothiaol in einer Menge von 2,5 bis 70 Gew.-%,
(ii) einen Ester, ausgewählt aus der aus dem Methyl-, Ethyl- oder Propylester einer C₆-C₂₀-Fettsäure, die aus Olivenöl, Rapsöl, Canolaöl, Erdnussöl, Palmöl, Sojabohnenöl, Sonnenblumenöl, Distelöl oder Castoröl erhältlich ist, oder einer Mischung solcher Ester bestehenden Gruppe in einer Menge von 10 bis 65 Gew.-%
(iii) den oberflächenaktiven Stoff in einer Menge von 5 bis 25 Gew.-%,
(iv) das weitere Biozid in einer Menge von 0 bis 15 Gew,-%,
(v) das Kohlenwasserstofflösungsmittel in einer Menge von 0 bis 25 Gew,-%,

3. Fungizidkonzentrat nach Anspruch 1 oder 2, wobei der Ester ein Ester von Stearinsäure, Ölsäure oder Linolensäure ist.

4. Fungizidkonzentrat nach einem der Ansprüche 1 bis 3, wobei die Fettsäure mit Methanol verestert ist.

5. Fungizidkonzentrat nach einem der Ansprüche 1 bis 4, wobei das weitere Biozid ausgewählt wird aus der aus 2-Octyl-2H-isothiazol-3-on (OIT, 4,5-Dichloro-2-octyl-2H-isothiazol-3-on (DCOIT), 3-lodo-2-propinyl-butylcarbamat (IPBC), Zinkpyrithion, Methylen-bis(4-chlorophenol)(dichlorophen), Chlorocresol, Biphenyl-2-ol, p-[(Diiodomethyl)sulphonyl]toluol, 1H-Benzimidazol-2-yl-carbaminsäuremethylester (Carbendazym), Chlorotalonil, Thiabendazol und Triazolen wie Propoconazol oder Tebuconazol und Kombinationen davon bestehenden Gruppe,

6. Fungizidkonzentrat nach einem der Ansprüche 1 bis 5, wobei der oberflächenaktive Stoff ein nicht ionischer oberflächenaktiver Stoff ist, der gegebenenfalls mindestens einen anionischen oberflächenaktiven Stoff umfasst.

7. Emulsion, hergestellt durch Dispergieren des Fungizidkonzentrats nach einem der Ansprüche 1 bis 6 in Wasser.

8. Verwendung der Emulsion nach Anspruch 7 zum Gerben von Leder.

## Revendications

1. Concentré de fongicide comprenant :
(i) du 2-(thiocyanométhylthio)-benzothiazole,
(ii) un ester sélectionné parmi le groupe consistant en l'ester méthylique, éthylique ou propylique d'un acide gras en C₆ à C₂₀ dérivable de l'huile d'olive, l'huile de colza, l'huile de canola, l'huile d'arachide, l'huile de palme, l'huile de soya, l'huile de tournesol, l'huile de chardon ou l'huile de castor, ou d'un mélange de tels esters,
(iii) un agent de surface ou un mélange d'agents de surface,
(iv) le cas échéant, un biocide additionnel,
(v) le cas échéant, un solvant hydrocarburé.

2. Concentré de fongicide selon la revendication 1, comprenant :
(i) le 2-(thiocyanométhylthio)-benzothiazole dans une quantité de 2,5 à 70% en poids,
(ii) un ester sélectionné parmi le groupe consistant en l'ester de méthyle, éthyle ou propyle d'un acide gras en C₆ à C₂₀ dérivable de l'huile d'olive, l'huile de colza, l'huile de canola, l'huile d'arachide, l'huile de palme, l'huile de soya, l'huile de tournesol, l'huile de chardon ou l'huile de castor, ou d'un mélange de tels esters, dans une quantité de 10 à 65% en poids,
(iii) l'agent de surface dans une quantité de 5 à 25% en poids,
(iv) le biocide additionnel dans une quantité de 0 à 15% en poids,
(v) le solvant hydrocarburé dans une quantité de 0 à 25% en poids.

3. Concentré de fongicide selon la revendication 1 ou 2, dans lequel l'ester est un ester de l'acide stéarique, l'acide oléique ou l'acide linoléique.

4. Concentré de fongicide selon l'une des revendications 1 à 3, dans lequel l'acide gras est estérifié avec du méthanol.

5. Concentré de fongicide selon l'une des revendications 1 à 4, le biocide additionnel étant sélectionné parmi le groupe consistant en le 2-octyl-2H-isothiazol-3-on (OIT, 4,5-dichloro-2-octyl-2H-iosthiazol-3-on (DCOIT), le 3-iodo-2-propynyle butyle carbamate (IPBC), le pyrithione de zinc, le méthylène-bis(4-chlorophenol)(dichlorophène), le chlorocrésol, le biphényl-2-ol, le p-[(diiodométhyl)sulphonyl)]toluène, l'ester méthylique d'acide 1H-benzimidazole-2-yle-carbamoique (le carbendazyme), le chlorotalonile, le thiabendazole et les triazoles, tel que le propiconazole ou le tebuconazole et les associations de ceux-ci.

6. Concentré de fongicide selon l'une des revendications 1 à 5, dans lequel l'agent de surface est un agent de surface non ionique comprenant, le cas échéant, au moins un agent de surface anionique.

7. Emulsion préparée par disperser le concentré de fongicide selon l'une des revendications 1 à 6 dans l'eau.

8. Utilisation de l'émulsion selon la revendication 7 pour le tannage de cuir.
